(19) Europäisches Patentamt
European Patent Office
Office européen des brevets

(11) EP 1 541 824 A1

(12) **EUROPEAN PATENT APPLICATION**
published in accordance with Art. 158(3) EPC

(43) Date of publication:
**15.06.2005 Bulletin 2005/24**

(21) Application number: **02758824.3**

(22) Date of filing: **09.08.2002**

(51) Int Cl.[7]: **F01N 5/02**, F28F 27/00, F24H 1/00

(86) International application number:
**PCT/JP2002/008195**

(87) International publication number:
**WO 2004/015253 (19.02.2004 Gazette 2004/08)**

(84) Designated Contracting States:
**AT BE BG CH CY CZ DE DK EE ES FI FR GB GR IE IT LI LU MC NL PT SE SK TR**

(71) Applicant: **Honda Giken Kogyo Kabushiki Kaisha**
**Minato-ku, Tokyo 107-8556 (JP)**

(72) Inventor: **BABA, Tsuyoshi,**
**K.K. Honda Gijutsu Kenkyusho**
**Wako-shi, Saitama 351-0193 (JP)**

(74) Representative:
**Prechtel, Jörg, Dipl.-Phys. Dr. et al**
**Weickmann & Weickmann**
**Patentanwälte**
**Postfach 86 08 20**
**81635 München (DE)**

(54) **WORKING MEDIUM SUPPLY CONTROLLER IN HEAT EXCHANGER**

(57) A working medium supply control system in a heat exchanger is provided that includes reference supply rate prediction means (M1) for predicting a future working medium reference supply rate (Gsteam_set) on the basis of values detected by a heat medium measurement sensor (S1, S2) and a working medium measurement sensor (S3, S4), heat quantity change calculation means (M2) for calculating a heat quantity change per unit time (Qmas) of a heat transfer tube (17), supply rate correction calculation means (M3) for calculating a working medium supply rate correction (dGsteam) on the basis of the heat quantity change (Qmas) calculated by the heat quantity change calculation means (M2), and target supply rate calculation means (M4) for calculating a target working medium supply rate (Gsteam_target) on the basis of the reference supply rate (Gsteam_set) predicted by the reference supply rate prediction means (M1) and the supply rate correction (dGsteam) calculated by the supply rate correction calculation means (M3). In accordance with this arrangement, it is possible to maximize the efficiency of recovery of thermal energy of a heat medium by minimizing the thermal mass loss in the heat transfer tube of the heat exchanger in a transition period in which the thermal energy of the heat medium changes.

FIG.1

11
S1
U
E
12
S4
Tgas_in, Pgas_in, Ggas
Tsteam_out,
Psteam_out
HEAT TRANSFER TUBE
MEASUREMENT UNIT
Ti
S5
WATER
SUPPLY
CONTROL
SYSTEM
S3
Tsteam_in, Psteam_in,
Gsteam
17
Tgas_out, Pgas_out
S2
16
15
14
13
WATER SUPPLY
UNIT

EP 1 541 824 A1

## Description

FIELD OF THE INVENTION

The present invention relates to a heat exchanger that carries out heat exchange between a high temperature heat medium whose thermal energy changes and a low temperature working medium flowing through the interior of a heat transfer tube.

BACKGROUND ART

Japanese Utility Model Registration Publication No. 2-38162 describes an arrangement in which the temperature of steam generated by a waste heat once-through boiler employing as a heat source exhaust gas of an engine rotating at a constant speed is compared with a target steam temperature, and the rate of water supplied to the waste heat once-through boiler is feedback controlled so that the temperature of the steam coincides with the target steam temperature, wherein the control precision is improved by compensating for variations in the load of the engine by adding to a feedback signal a feed forward signal calculated on the basis of the steam pressure at the outlet of the waste heat once-through boiler.

In general, in an evaporator for generating steam by heating water with the exhaust gas of an engine, not only is the engine exhaust gas cooled by an exhaust valve seat, an exhaust valve, an exhaust port, etc. while flowing to the evaporator, but also, since the flow rate of the exhaust gas is small in a low load running region of the engine, there is a large decrease in the temperature of the exhaust gas.

In an evaporator that carries out heat exchange between exhaust gas and water, the larger the difference in temperature between high temperature exhaust gas and low temperature steam (water), the higher the heat exchange efficiency. A heat exchange energy Q of the heat exchanger can be expressed by

$$Q = Apip \times K \times (Tgas - Tsteam)$$

where the heat transfer area of the heat exchanger is Apip, the heat flow-through rate is K, the exhaust gas temperature is Tgas, and the steam (water) temperature is Tsteam. It is not desirable to increase the heat transfer area Apip in order to increase the heat exchange energy Q, since the dimensions of the evaporator increase, and it is necessary to increase the flow rate of the exhaust gas in order to increase the heat flow-through rate K, thus causing the problem that back pressure due to pressure loss is increased and the engine performance is degraded.

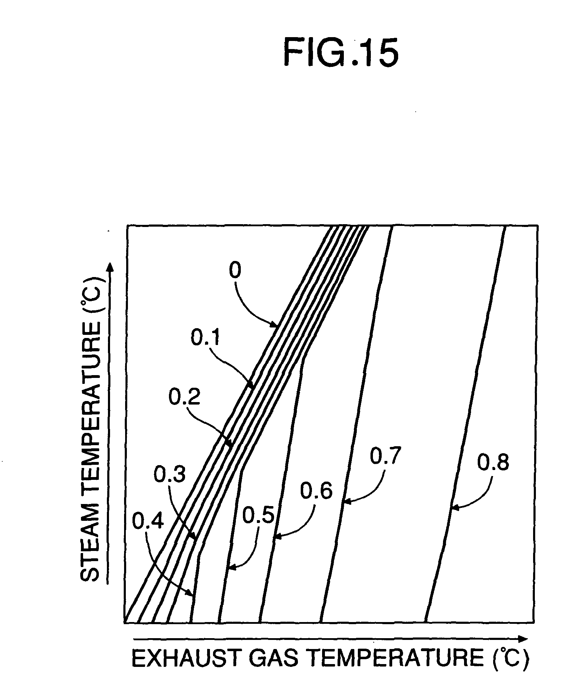

FIG. 15 shows evaporator efficiency, which is determined by the exhaust gas temperature and the steam temperature, and when the exhaust gas temperature is low, the heat exchange efficiency for generating high temperature steam is low.

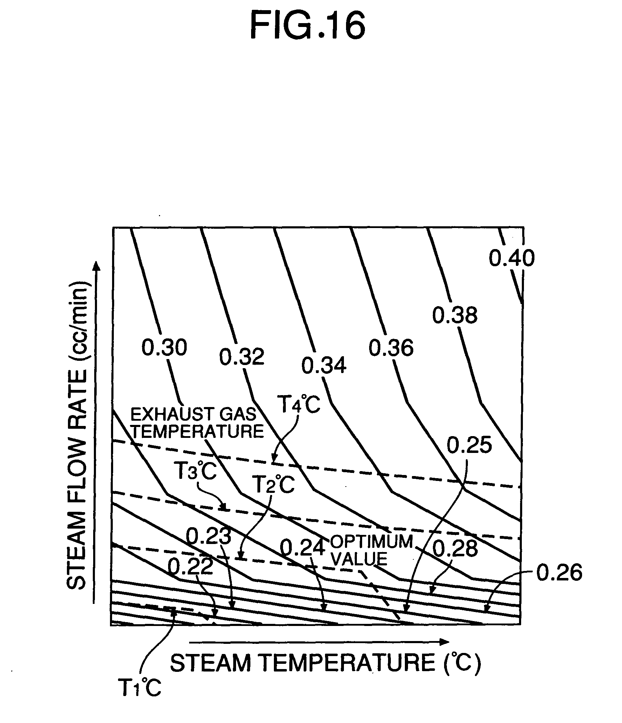

On the other hand, in an expander that is operated by steam generated in an evaporator, in principle, the higher the enthalpy of steam at an inlet of the expander, the higher the efficiency, but in reality, because of heat dissipation to walls of the expander and leakage of the steam, the smaller the rate of steam supplied, the greater the influence of the loss. The solid lines in FIG. 16 show the expander efficiency, which is determined by the steam temperature and the steam flow rate, and the broken lines show the steam flow rates when the inlet temperature of the exhaust gas and the steam temperature in the evaporator are changed. Ideally, the higher the steam temperature, the higher the efficiency of the expander, but in reality the efficiency when the steam temperature is low and the supply flow rate is high is higher than that when the steam temperature is high and the supply flow rate is low.

The above-mentioned arrangement described in Japanese Utility Model Registration Publication No. 2-38162 has as an object making the steam temperature coincide precisely with the target steam temperature, and does not have as an object reducing thermal mass loss occurring in the heat transfer tube of the waste heat once-through boiler.

For example, if control is carried out to increase the target temperature for steam generated in the evaporator in response to an increase in the temperature of the exhaust gas when a vehicle is being accelerated, that is, when the vehicle is in a transition period from the engine being at low load to the engine being at high load, since in the above transition period there is a time lag of a few seconds to around ten seconds between the load of the engine becoming high and the temperature of the exhaust gas increasing because of the influence of the thermal mass of an exhaust passage and the thermal mass of the evaporator, there is a time lag of a few tens of seconds in the temperature of the steam generated when the temperature of the evaporator heat transfer tube increases reaching the target temperature.

When taking into consideration actual travel of the vehicle, the length of the transition period for the change in output of the engine is often on the order of a few seconds; even if the target steam temperature is changed in response to a change in the exhaust gas temperature in order to obtain maximum efficiency of the evaporator under steady running conditions of the engine, a thermal mass loss occurs in the transition period, and there is the problem that the thermal energy of the exhaust gas cannot be recovered effectively.

## DISCLOSURE OF INVENTION

The present invention has been carried out under the above-mentioned circumstances, and it is an object thereof to maximize the efficiency of recovery of thermal energy of a heat medium by minimizing the thermal mass loss in a heat transfer tube of a heat exchanger in a transition period in which the thermal energy of the heat medium changes.

In order to attain this object, in accordance with a first aspect of the present invention, there is proposed a working medium supply control system in a heat exchanger that carries out heat exchange between a high temperature heat medium whose thermal energy changes and a low temperature working medium flowing through the interior of a heat transfer tube, the system including a heat medium measurement sensor for detecting the temperature, the pressure, and the mass flow rate of the heat medium; a working medium measurement sensor for detecting the temperature, the pressure, and the mass flow rate of the working medium; reference supply rate prediction means for predicting a future working medium reference supply rate on the basis of values detected by the heat medium measurement sensor and the working medium measurement sensor; heat quantity change calculation means for calculating a heat quantity change per unit time of the heat transfer tube; supply rate correction calculation means for calculating a working medium supply rate correction on the basis of the heat quantity change calculated by the heat quantity change calculation means; and target supply rate calculation means for calculating a target working medium supply rate on the basis of the reference supply rate predicted by the reference supply rate prediction means and the supply rate correction calculated by the supply rate correction calculation means.

In accordance with this arrangement, since the target working medium supply rate is calculated by correcting the future working medium reference supply rate predicted on the basis of the values detected by the heat medium measurement sensor and the working medium measurement sensor using the supply rate correction calculated on the basis of the heat quantity change per unit time of the heat transfer tube, it is possible to minimize the thermal mass loss occurring in the heat transfer tube even when the thermal energy of the heat medium changes transiently.

Furthermore, in accordance with a second aspect of the present invention, in addition to the first aspect, there is proposed the working medium supply control system in a heat exchanger, wherein the heat quantity change calculation means calculates the heat quantity change per unit time of the heat transfer tube on the basis of values detected by the heat medium measurement sensor and the working medium measurement sensor.

In accordance with this arrangement, since the heat quantity change per unit time of the heat transfer tube is detected on the basis of values detected by the heat medium measurement sensor and the working medium measurement sensor, it is possible to precisely detect the heat quantity change per unit time of the heat transfer tube.

Moreover, in accordance with a third aspect of the present invention, in addition to the first aspect, there is proposed the working medium supply control system, wherein the system further includes a heat transfer tube temperature distribution measurement sensor for measuring a temperature distribution of the heat transfer tube, and the heat quantity change calculation means calculates the heat quantity change per unit time of the heat transfer tube on the basis of a value detected by the heat transfer tube temperature distribution measurement sensor.

In accordance with this arrangement, since the heat quantity change per unit time of the heat transfer tube is detected on the basis of the value detected by the heat transfer tube temperature distribution measurement sensor, it is possible to precisely detect the heat quantity change per unit time of the heat transfer tube.

Furthermore, in accordance with a fourth aspect of the present invention, in addition to any one of the first to the third aspects, there is proposed the working medium supply control system in a heat exchanger, wherein the heat medium is an engine exhaust gas.

In accordance with this arrangement, since the engine exhaust gas is utilized as the heat medium, it is possible to operate the heat exchanger by utilizing the waste heat of the engine effectively.

## BRIEF DESCRIPTION OF DRAWINGS

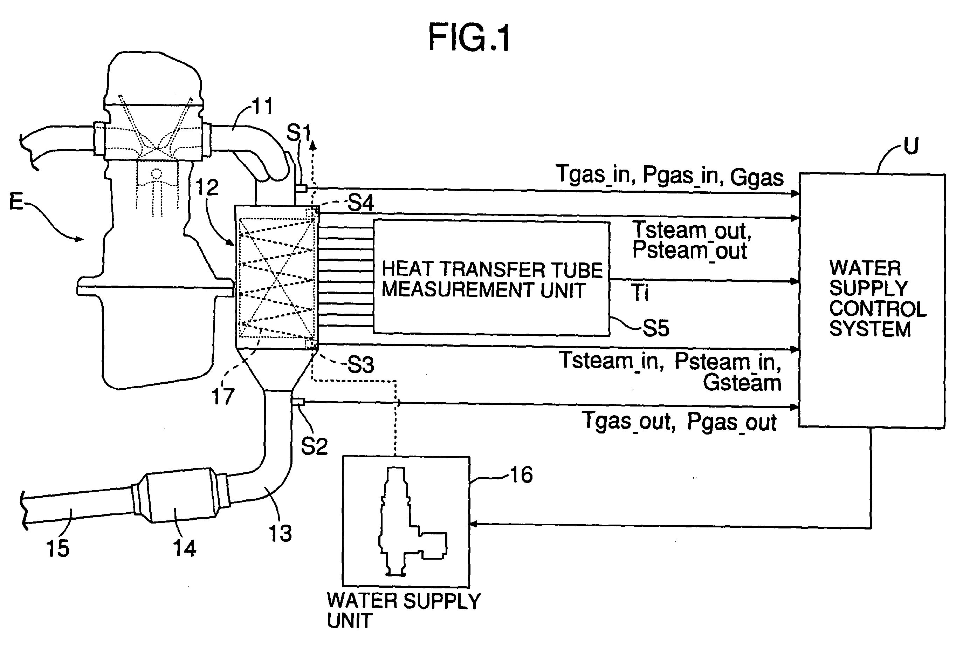

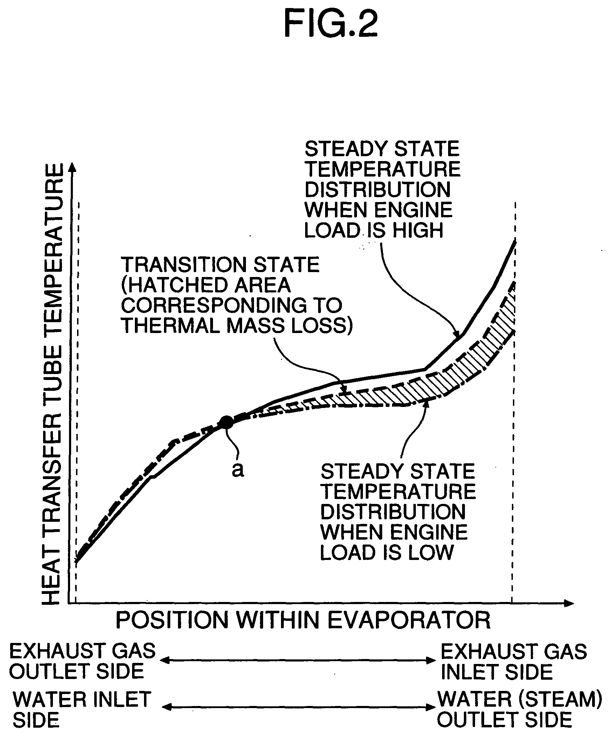

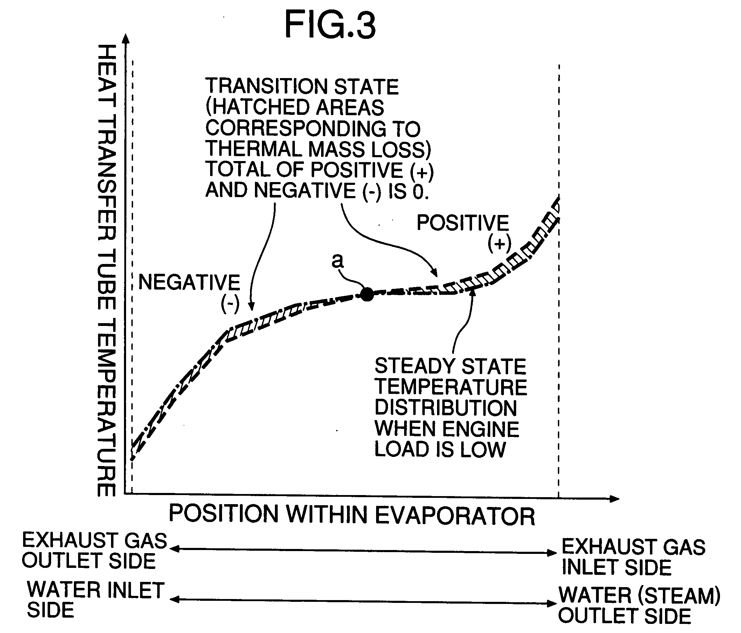

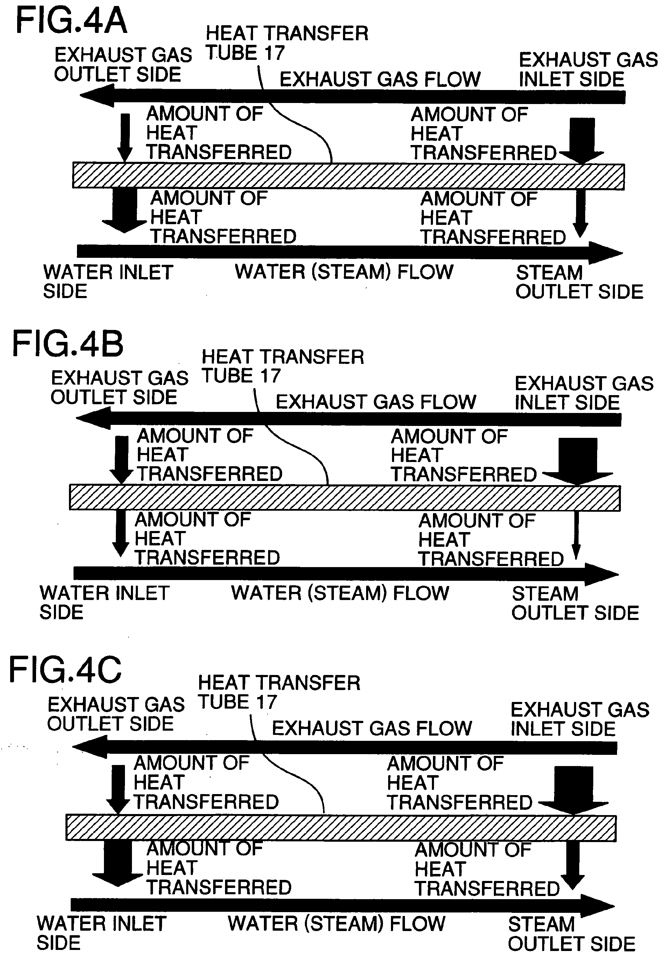

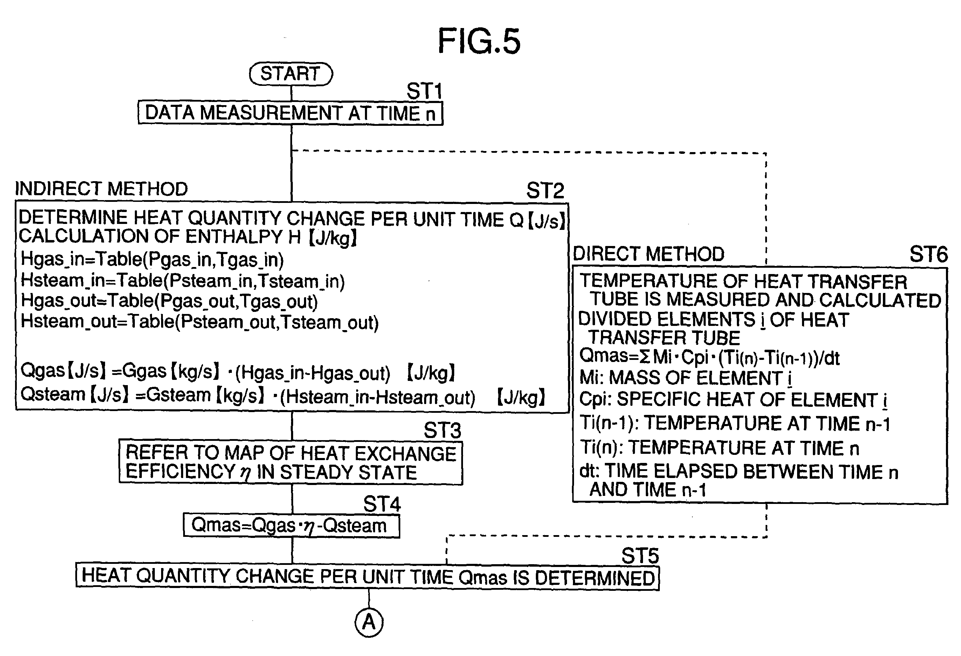

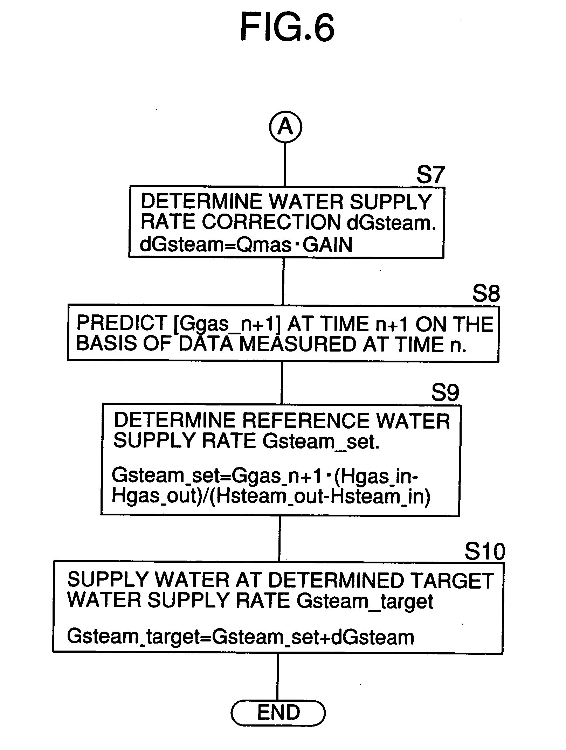

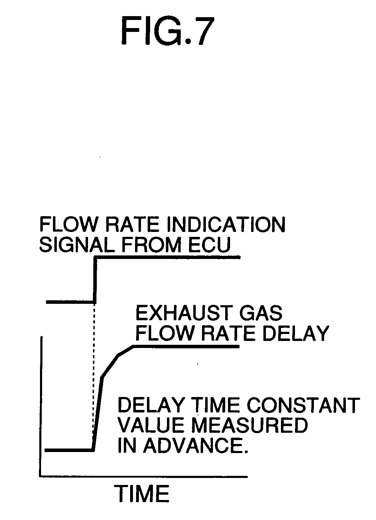

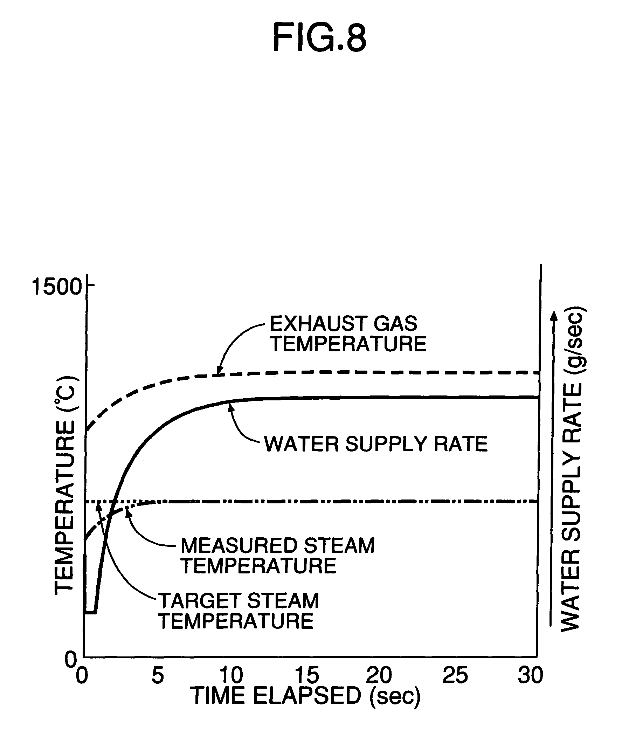

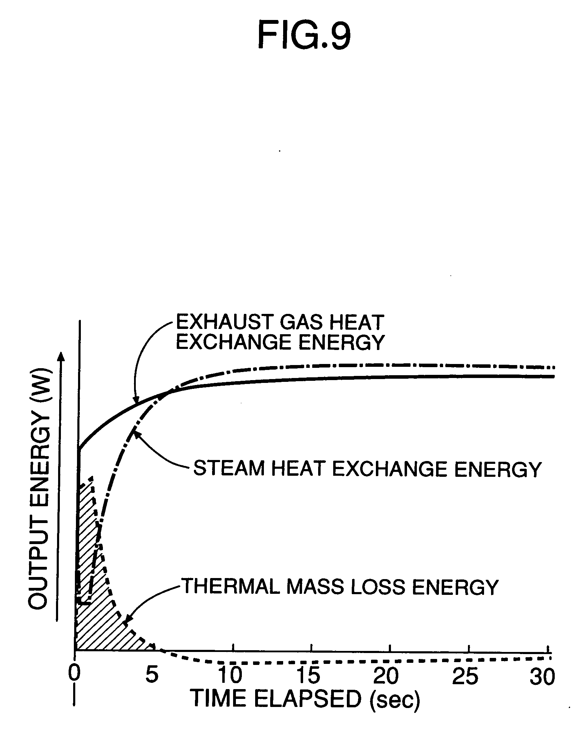

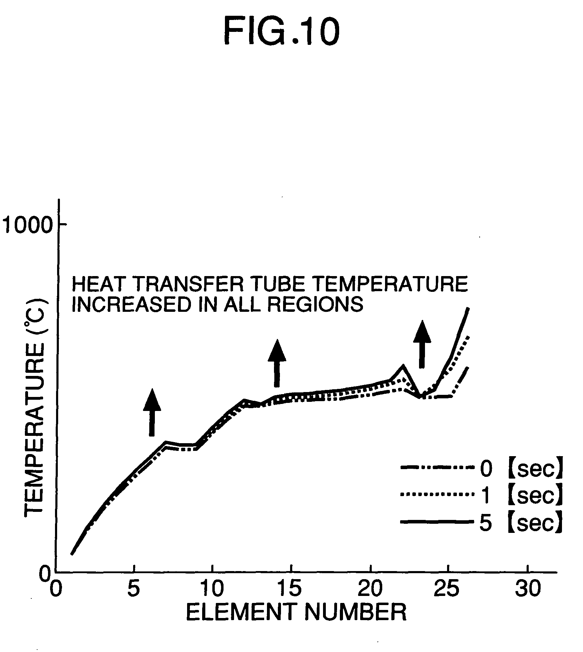

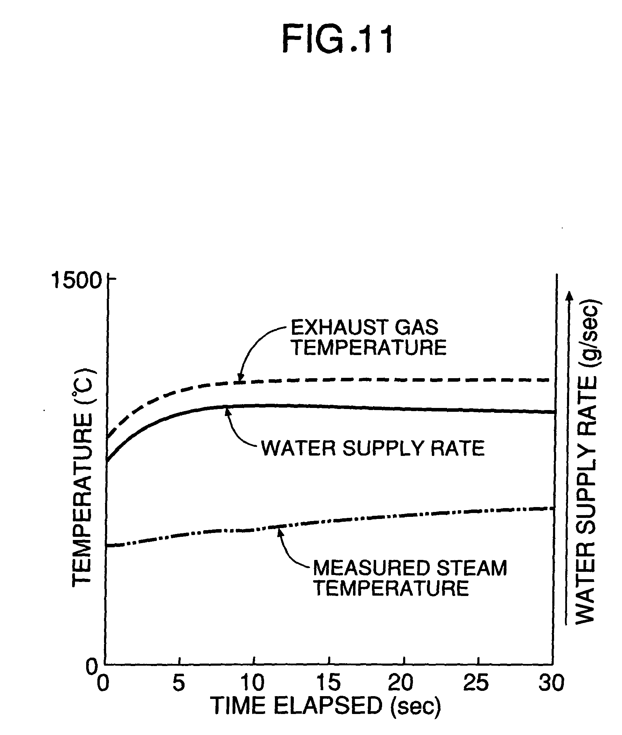

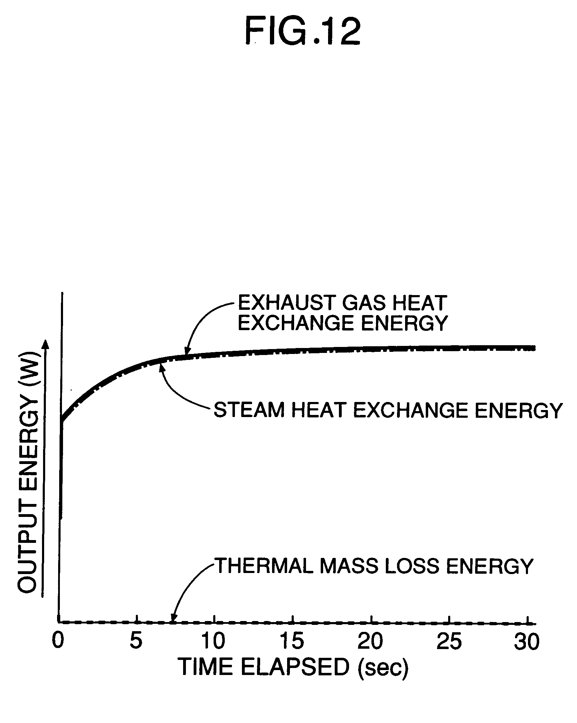

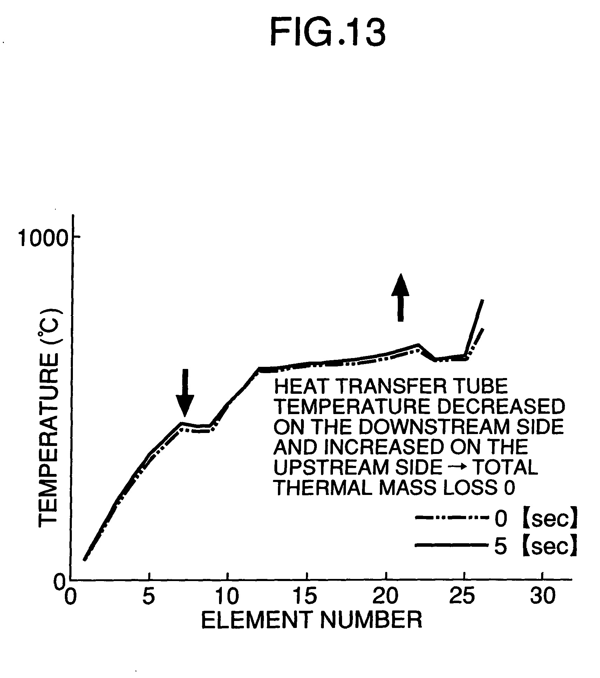

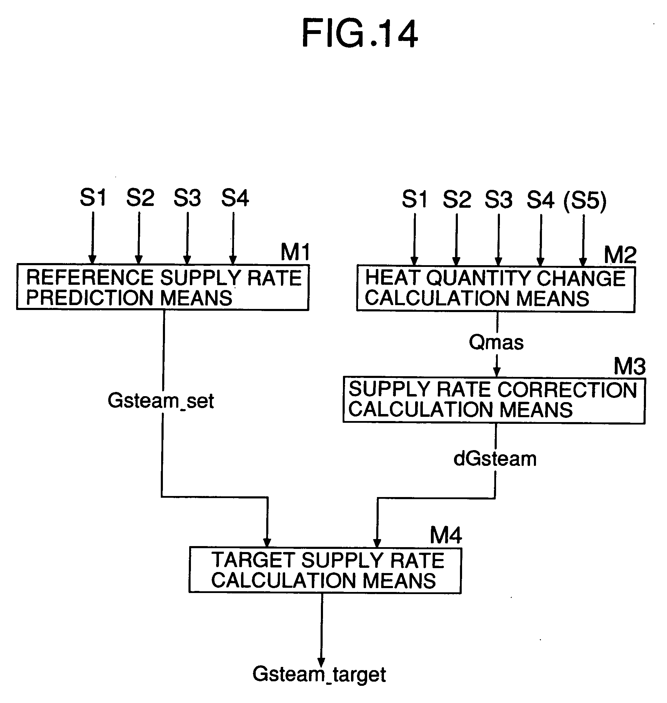

FIG. 1 to FIG. 14 show one embodiment of the present invention; FIG. 1 is a diagram showing the overall arrangement of a system for controlling the rate of water supplied to an evaporator, FIG. 2 is a graph showing thermal mass loss in a Comparative Example, FIG. 3 is a graph showing thermal mass loss in the Embodiment, FIG. 4A to FIG. 4C are diagrams for explaining the principle of reducing the thermal mass loss, FIG. 5 is the first part of a flow chart for control of the rate of water supplied to the evaporator, FIG. 6 is the second part of the flow chart for control of the rate of water supplied to the evaporator, FIG. 7 is a diagram for explaining a method for predicting a mass flow rate of an exhaust gas, FIG. 8 is a graph showing changes in exhaust gas temperature, rate of water supplied, and measured steam temperature of the Comparative Example, FIG. 9 is a graph showing changes in exhaust gas heat exchange energy, steam heat exchange energy, and thermal mass loss energy of the Comparative Example, FIG. 10 is a graph showing the relationship between position and temperature of a heat transfer tube of the Comparative Example, FIG. 11 is a graph showing changes in exhaust gas temperature, rate of water supplied, and measured steam temperature in the Embodiment, FIG. 12 is a graph showing changes in exhaust gas heat exchange energy, steam heat exchange energy, and thermal mass loss energy in the Embodiment, FIG. 13 is a graph showing the relationship between position and temperature of a heat transfer tube in the Embodiment, and FIG. 14 is a diagram of Claims.

FIG. 15 is a graph showing evaporator efficiency, which is determined by exhaust gas temperature and steam temperature.

FIG. 16 is a graph showing expander efficiency, which is determined by steam temperature and steam flow rate, and the steam flow rate when exhaust gas inlet temperature and steam temperature are changed.

BEST MODE FOR CARRYING OUT THE INVENTION

An embodiment of the present invention is explained below with reference to the attached drawings.

As shown in FIG. 1, an exhaust manifold 11 of an engine E is connected in line to an evaporator 12, an exhaust pipe 13, an exhaust gas purification catalyst 14, and an exhaust pipe 15, and the evaporator 12 is connected to a water supply unit 16. When water supplied from the water supply unit 16 flows within a heat transfer tube 17, it carries out heat exchange with exhaust gas, turns into high temperature, high pressure steam, and is supplied to an expander, which is not illustrated.

An exhaust gas inlet measurement sensor S1 provided on the exhaust manifold 11 on the evaporator 12 inlet side detects an exhaust gas inlet temperature Tgas_in, an exhaust gas inlet pressure Pgas_in, and an exhaust gas mass flow rate Ggas. An exhaust gas outlet measurement sensor S2 provided on the exhaust pipe 13 on the evaporator 12 outlet side detects an exhaust gas outlet temperature Tgas-out and an exhaust gas outlet pressure Pgas_out. The exhaust gas mass flow rate Ggas can be calculated using an indicated value for the amount of fuel supplied and an indicated value for the air/fuel ratio or can be calculated using an indicated value for the amount of fuel supplied and a measurement value for the mass flow rate of the amount of air taken in.

A water inlet measurement sensor S3 provided at a water inlet of the evaporator 12 detects a water inlet temperature Tsteam_in, a water inlet pressure Psteam_in, and a water mass flow rate Gsteam. A steam outlet measurement sensor S4 provided at a steam outlet of the evaporator 12 detects a steam outlet temperature Tsteam_out and a steam outlet pressure Psteam_out. The water mass flow rate Gsteam can be calculated using the pressure of water supplied from the water supply unit 16 or the degree of opening of a flow rate control valve, or can also be measured directly using a flow meter. A heat transfer tube measurement unit S5 detects a heat transfer tube temperature Ti of each of a plurality of elements forming the heat transfer tube 17.

A water supply control system U, into which are input the exhaust gas inlet temperature Tgas_in, the exhaust gas inlet pressure Pgas_in, the exhaust gas mass flow rate Ggas, the exhaust gas outlet temperature Tgas_out, the exhaust gas outlet pressure Pgas_out, the water inlet temperature Tsteam_in, the water inlet pressure Psteam_in, the water mass flow rate Gsteam, the steam outlet temperature Tsteam_out, the steam outlet pressure Psteam_out, and the heat transfer tube temperature Ti, controls the rate of water supplied to the evaporator 12 via the water supply unit 16.

In the present invention, while taking into consideration the temperature distribution (that is, the heat transfer tube temperatures Ti) of the heat transfer tube 17 of the evaporator 12, an appropriate water supply rate is set according to changes in the running conditions of the engine E, thereby reducing the thermal mass loss of the evaporator 12. The principle thereof is explained below with reference to FIG. 2 and FIG. 3.

FIG. 2 to FIG. 4C are conceptual drawings of the thermal mass loss occurring in a transition period of the running conditions of the engine E; the abscissa denotes positions of the heat transfer tube 17 within the evaporator 12 and the ordinate denotes the heat transfer tube temperature Ti detected by the heat transfer tube measurement unit S5. The dotted broken line shows a steady state temperature distribution when the load is low, the solid line shows a steady state temperature distribution when the load is high, and the broken line shows a temperature distribution in a transition period. Furthermore, FIG. 4A to FIG. 4C schematically show the amount of heat transferred from the exhaust gas to the heat transfer tube 17 and the amount of heat transferred from the heat transfer tube 17 to water (steam), FIG. 4A showing a steady state, FIG. 4B showing a transition period of a Comparative Example, and FIG. 4C showing a transition period of the present invention.

FIG. 2 shows the Comparative Example; the steady state temperature distribution when the load is low (dotted broken line) and the steady state temperature distribution when the load is high (solid line) intersect each other at point a. On the exhaust gas inlet side of point a, the temperature distribution when the load is high is higher than the temperature distribution when the load is low, and the difference therebetween is large, whereas on the exhaust gas outlet side of point a, the temperature distribution when the load is high is lower than the temperature distribution when the load is low, and the difference therebetween is small. In conventional control, in order to shift from a state in which relatively low temperature steam is generated when the load is low to a state in which relatively high temperature steam is generated when the load is high, the rate of water supplied to the evaporator 12 is decreased, thus increasing the temperature of the heat transfer tube 17.

During this process, on the exhaust gas inlet side of point a there is a relatively large increase in the temperature of the heat transfer tube 17 from the temperature distribution when the load is low to the temperature distribution during the transition period, and on the exhaust gas outlet side of point a the temperature of the heat transfer tube 17 hardly changes from the temperature distribution when the load is low to the temperature distribution during the transition period, thus generating a thermal mass loss shown by the hatched area. That is, in the transition period the thermal energy of the exhaust gas is used for increasing the temperature of the heat transfer tube 17 on the exhaust gas inlet side of point a, and is not used for increasing the steam temperature, thus causing the thermal mass loss.

This is explained further with reference to FIG. 4A and FIG. 4B; when the state shifts from the steady state shown in FIG. 4A to the transition period shown in FIG. 4B, if the rate of water supplied to the evaporator 12 is reduced in order to increase the temperature of the steam generated, the temperature of the heat transfer tube 17 increases throughout the heat transfer tube 17 because of the relationship between the amount of heat transferred from the exhaust gas to the heat transfer tube 17 and the amount of heat transferred from the heat transfer tube 17 to the water (steam).

In contrast, in the present invention shown in FIG. 3, on the exhaust gas inlet side of point a the temperature of the heat transfer tube 17 increases in going from the temperature distribution when the load is low to the temperature distribution during the transition period, whereas on the exhaust gas outlet side of point a the temperature of the heat transfer tube 17 decreases in going from the temperature distribution when the load is low to the temperature distribution during the transition period, and a positive thermal mass loss shown by the hatched area and a negative thermal mass loss shown by the reverse hatched area occur concurrently. The negative thermal mass loss referred to here means a phenomenon in which, when the temperature of the heat transfer tube 17 decreases, the thermal energy of the heat transfer tube 17 is utilized to increase the steam temperature. By controlling the rate of water supplied to the evaporator 12 appropriately so as to counterbalance the positive thermal mass loss with the negative thermal mass loss, the thermal energy of the exhaust gas can be utilized effectively for increasing the steam temperature.

This is explained further with reference to FIG. 4A and FIG. 4C; when the state shifts from the steady state shown in FIG. 4A to the transition period shown in FIG. 4C, if the rate of water supplied to the evaporator 12 is increased appropriately, the temperature of the heat transfer tube 17 on the exhaust gas inlet side increases and the temperature of the heat transfer tube 17 on the exhaust gas outlet side decreases as a result of the relationship between the amount of heat transferred from exhaust gas to the heat transfer tube 17 and the amount of heat transferred from the heat transfer tube 17 to the water (steam).

As shown in the diagram of the Claims of FIG. 14, the water supply control system U includes reference supply rate prediction means M1, heat quantity change calculation means M2, supply rate correction calculation means M3, and target supply rate calculation means M4. The reference supply rate prediction means M1 predicts a future reference supply rate Gsteam_set of working medium on the basis of values detected by heat medium measurement sensors S1 and S2 (the exhaust gas inlet measurement sensor S1 and the exhaust gas outlet measurement sensor S2) and working medium measurement sensors S3 and S4 (the water inlet measurement sensor S3 and the steam outlet measurement sensor S4). The heat quantity change calculation means M2 indirectly calculates a heat quantity change per unit time Qmas of the heat transfer tube 17 on the basis of values detected by the heat medium measurement sensors S1 and S2 and the working medium measurement sensors S3 and S4, or directly calculates a heat quantity change per unit time Qmas of the heat transfer tube 17 on the basis of values detected by a heat transfer tube temperature distribution measurement sensor S5 (the heat transfer tube measurement unit S5). The supply rate correction calculation means M3 calculates a supply rate correction dGsteam of working medium on the basis of the heat quantity change Qmas calculated by the heat quantity change calculation means M2. The target supply rate calculation means M4 calculates a target supply rate Gsteam_target of working medium on the basis of the reference supply rate Gsteam_set predicted by the reference supply rate prediction means M1 and the supply rate correction dGsteam calculated by the supply rate correction calculation means M3.

Details of the control, by the water supply control system U, of the rate of water supplied to the evaporator 12 are now explained with reference to flow charts of FIG. 5 and FIG. 6. There are indirect and direct methods for calculating the heat quantity change per unit time Qmas of the heat transfer tube 17, and the indirect method is explained first.

Firstly in step ST1, data at time n are measured by each of the sensors S1 to S4 (excluding the heat transfer tube measurement unit S5), and in the subsequent step ST2 enthalpies Hgas_in, Hsteam_in, Hgas_out, and Hsteam_out of the exhaust gas and the water (steam) are calculated in order to determine the heat quantity changes per unit time Qgas and Qsteam of the exhaust gas and the water (steam).

That is, the enthalpy Hgas_in of the exhaust gas at the inlet of the evaporator 12 is looked up in a map using the pressure Pgas_in and the temperature Tgas_in of the exhaust gas at the inlet of the evaporator 12, the enthalpy Hsteam_in of the water at the inlet of the evaporator 12 is looked up in a map using the pressure Psteam_in and the temperature Tsteam_in of the water at the inlet of the evaporator 12, the enthalpy Hgas_out of the exhaust gas at the outlet of the evaporator 12 is looked up in a map using the pressure Pgas_out and the temperature Tgas_out of the exhaust gas at the outlet of the evaporator 12, and the enthalpy Hsteam_out of the water at the outlet of the evaporator 12 is looked up in a map using the pressure Psteam_out and the temperature Tsteam_out of the water at the outlet of the evaporator 12.

The heat quantity change per unit time Qgas of the exhaust gas is calculated from

$$Qgas = Ggas \times (Hgas_in - Hgas_out)$$

using the exhaust gas mass flow rate Ggas, the enthalpy Hgas_in of the exhaust gas at the inlet of the evaporator 12, and the enthalpy Hgas_out of the exhaust gas at the outlet of the evaporator 12. Furthermore, the heat quantity change per unit time Qsteam of the water (steam) is calculated from

$$Qsteam = Gsteam \times (Hsteam_in - Hsteam_out)$$

using the water mass flow rate Gsteam, the enthalpy Hsteam_in of the water at the inlet of the evaporator 12, and the enthalpy Hsteam_out of the water at the outlet of the evaporator 12.

The heat quantity change per unit time Qgas of the exhaust gas and the heat quantity change per unit time Qsteam of the water (steam) calculated above in principle satisfy Qgas = heat quantity change Qsteam, but in reality because of heat dissipation loss within the evaporator 12, in step ST3 a heat exchange efficiency $\eta$ in a steady state is looked up in a map using the exhaust gas inlet temperature Tgas_in and the steam outlet temperature Tsteam_out, and a correction is carried out using this heat exchange efficiency $\eta$. The heat exchange efficiency $\eta$ satisfies the following equation in the steady state.

$$Qgas \times \eta = Qsteam$$

In the subsequent step ST4, a heat quantity change per unit time Qmas of the heat transfer tube 17 is calculated from

$$Qmas = Qgas \times \eta - Qsteam$$

and in step ST5 the heat quantity change per unit time Qmas of the heat transfer tube 17 is determined.

The direct method for calculating the heat quantity change per unit time Qmas of the heat transfer tube 17 is now explained.

Firstly, in step ST1, a temperature Ti of each section of the heat transfer tube 17 at time $\underline{n}$ is measured by the heat transfer tube measurement unit S5, and then in step ST6 the heat quantity change per unit time Qmas of the heat transfer tube 17 is calculated from

$$Qmas = \Sigma Mi \times Cpi \times \{Ti(n) - Ti(n-1)\} / dt.$$

Here, Mi denotes a mass of element $\underline{i}$ of the divided heat transfer tube 17, Cpi denotes a specific heat of element $\underline{i}$ of the divided heat transfer tube 17, Ti(n) denotes a temperature of element $\underline{i}$ at time $\underline{n}$, Ti(n-1) denotes a temperature of element $\underline{i}$ at time n-1, and dt is the time elapsed between time $\underline{n}$ and time n-1. The symbol $\Sigma$ denotes the summation of $Mi \times Cpi \times \{Ti(n) - Ti(n-1)\} / dt$ for all elements $\underline{i}$.

After the heat quantity change per unit time Qmas of the heat transfer tube 17 is determined by the indirect or direct method, in step ST7 the heat quantity change per unit time Qmas of the heat transfer tube 17 is multiplied by a gain GAIN to calculate a water supply rate correction dGsteam from

$$dGsteam = Qmas \times GAIN.$$

In the subsequent step ST8, an exhaust gas mass flow rate Ggas_n+1 at time n+1 is predicted on the basis of data at time $\underline{n}$. That is, as shown in FIG. 7, when the load of the engine E is increased stepwise, a delay in response of the change of the exhaust gas mass flow rate Ggas is measured in advance, and the exhaust gas mass flow rate Ggas_n+1 at time n+1 is predicted while taking into consideration this delay in response. In the subsequent step ST9, the reference water supply rate Gsteam_set is calculated from

$$\text{Gsteam_set} = \text{Ggas_n+1} \times (\text{Hgas_in} - \text{Hgas_out}) \div (\text{Hsteam_out} - \text{Hsteam_in}).$$

In step ST10, the target water supply rate Gsteam_target is calculated from

$$\text{Gsteam_target} = \text{Gsteam_set} + \text{dGsteam}$$

using the reference water supply rate Gsteam_set and the water supply rate correction dGsteam, and the rate of water supplied to the evaporator 12 is controlled on the basis of the target water supply rate Gsteam_target.

Graphs of FIG. 8 to FIG. 10 show a Comparative Example in which, while maintaining the rotational speed of the engine E at a predetermined rotational speed, the load (intake negative pressure) is changed stepwise in a predetermined range, and the target steam temperature is set at a predetermined temperature.

In FIG. 8, when the load of the engine E increases and the temperature of the exhaust gas increases, the rate of water supplied first greatly decreases, and then increases, and the measured steam temperature converges to the predetermined temperature, which is the target steam temperature, after about 5 seconds.

As shown in FIG. 9, the exhaust gas heat exchange energy (energy given to the water (steam) by the exhaust gas) gradually increases, whereas the steam heat exchange energy (energy that the water (steam) receives from the exhaust gas) first greatly decreases, and then increases. As a result, an energy corresponding to the difference between the exhaust gas heat exchange energy and the steam heat exchange energy becomes a thermal mass loss energy consumed for an increase in temperature of the entire region of the heat transfer tube 17 (see FIG. 10), and it can be seen that the efficiency of the evaporator 12 is degraded.

On the other hand, graphs of FIG. 11 to FIG. 13 show the Embodiment; in FIG. 11 when the load of the engine E increases and the temperature of the exhaust gas increases, the rate of water supplied increases by tracking the increase in temperature of the exhaust gas without decreasing and then gradually decreases, and the measured steam temperature gradually increases toward a predetermined temperature, which is a target steam temperature.

As shown in FIG. 12, the exhaust gas heat exchange energy (energy given to the water (steam) by the exhaust gas) and the steam heat exchange energy (energy that the water (steam) receives from the exhaust gas) increase in an almost identical pattern. As a result, the thermal mass loss energy corresponding to the difference between the exhaust gas heat exchange energy and the steam heat exchange energy is almost 0, and it can be seen that the efficiency of the evaporator 12 improves. The reason is that the temperature of the heat transfer tube 17 increases on the exhaust gas inlet side and decreases on the outlet side, and the thermal energy taken from the exhaust gas by the heat transfer tube 17 and the thermal energy given to the water (steam) by the heat transfer tube 17 are counterbalanced (see FIG. 13).

Although an embodiment of the present invention is explained in detail above, the present invention can be modified in a variety of ways without departing from the spirit and scope thereof.

For example, in the embodiment a transition period in which the load of the engine E increases is explained, but the same operational effect can be obtained in a transition period in which the load of the engine E decreases.

Furthermore, in the embodiment water (steam) is illustrated as the working medium, but any working medium can be employed.

Moreover, in the embodiment the exhaust gas of the engine E is illustrated as the heat medium, but any heat medium can be employed.

Furthermore, in the embodiment the heat exchanger is exemplified by the evaporator 12, but the present invention is also applicable to a heat exchanger other than the evaporator 12.

## INDUSTRIAL APPLICABILITY

As hereinbefore described, although the present invention can be suitably applied to a heat exchanger for a Rankine cycle system that converts thermal energy of engine exhaust gas into mechanical energy, the present invention can also be applied to a heat exchanger for any purpose.

## Claims

1. A working medium supply control system in a heat exchanger that carries out heat exchange between a high temperature heat medium whose thermal energy changes and a low temperature working medium flowing through the interior of a heat transfer tube (17), the system comprising:

   a heat medium measurement sensor (S1, S2) for detecting the temperature (Tgas_in, Tgas_out), the pressure (Pgas_in, Pgas_out), and the mass flow rate (Ggas) of the heat medium;
   a working medium measurement sensor (S3, S4) for detecting the temperature (Tsteam_in, Tsteam_out), the pressure (Psteam_in, Psteam_out), and the mass flow rate (Gsteam) of the working medium;
   reference supply rate prediction means (M1) for predicting a future working medium reference supply rate (Gsteam_set) on the basis of values detected by the heat medium measurement sensor (S1, S2) and the working medium measurement sensor (S3, S4);
   heat quantity change calculation means (M2) for calculating a heat quantity change per unit time (Qmas) of the heat transfer tube (17);
   supply rate correction calculation means (M3) for calculating a working medium supply rate correction (dGsteam) on the basis of the heat quantity change (Qmas) calculated by the heat quantity change calculation means (M2); and
   target supply rate calculation means (M4) for calculating a target working medium supply rate (Gsteam_target) on the basis of the reference supply rate (Gsteam_set) predicted by the reference supply rate prediction means (M1) and the supply rate correction (dGsteam) calculated by the supply rate correction calculation means (M3).

2. The working medium supply control system in a heat exchanger according to Claim 1, wherein the heat quantity change calculation means (M2) calculates the heat quantity change per unit time (Qmas) of the heat transfer tube (17) on the basis of values detected by the heat medium measurement sensor (S1, S2) and the working medium measurement sensor (S3, S4).

3. The working medium supply control system in a heat exchanger according to Claim 1, wherein the system further comprises a heat transfer tube temperature distribution measurement sensor (S5) for measuring a temperature distribution of the heat transfer tube (17), and the heat quantity change calculation means (M2) calculates the heat quantity change per unit time (Qmas) of the heat transfer tube (17) on the basis of a value detected by the heat transfer tube temperature distribution measurement sensor (S5).

4. The working medium supply control system in a heat exchanger according to any one of Claims 1 to 3, wherein the heat medium is exhaust gas of an engine (E).

FIG.1
11
S1
E
12
S4
Tgas_in, Pgas_in, Ggas
U
Tsteam_out,
Psteam_out
HEAT TRANSFER TUBE
MEASUREMENT UNIT
Ti
S5
WATER
SUPPLY
CONTROL
SYSTEM
S3
17
Tsteam_in, Psteam_in,
Gsteam
Tgas_out, Pgas_out
S2
16
15
14
13
WATER SUPPLY
UNIT

# FIG.2

STEADY STATE
TEMPERATURE
DISTRIBUTION
WHEN ENGINE
LOAD IS HIGH
TRANSITION STATE
(HATCHED AREA
CORRESPONDING TO
THERMAL MASS LOSS)
HEAT TRANSFER TUBE TEMPERATURE
a
STEADY STATE
TEMPERATURE
DISTRIBUTION
WHEN ENGINE
LOAD IS LOW
POSITION WITHIN EVAPORATOR
EXHAUST GAS
OUTLET SIDE
EXHAUST GAS
INLET SIDE
WATER INLET
SIDE
WATER (STEAM)
OUTLET SIDE

FIG.3
TRANSITION STATE (HATCHED AREAS CORRESPONDING TO THERMAL MASS LOSS) TOTAL OF POSITIVE (+) AND NEGATIVE (-) IS 0.
POSITIVE (+)
NEGATIVE (-)
a
STEADY STATE TEMPERATURE DISTRIBUTION WHEN ENGINE LOAD IS LOW
HEAT TRANSFER TUBE TEMPERATURE
POSITION WITHIN EVAPORATOR
EXHAUST GAS INLET SIDE
WATER (STEAM) OUTLET SIDE
EXHAUST GAS OUTLET SIDE
WATER INLET SIDE

FIG.4A
HEAT TRANSFER TUBE 17
EXHAUST GAS OUTLET SIDE
EXHAUST GAS FLOW
EXHAUST GAS INLET SIDE
AMOUNT OF HEAT TRANSFERRED
AMOUNT OF HEAT TRANSFERRED
AMOUNT OF HEAT TRANSFERRED
AMOUNT OF HEAT TRANSFERRED
WATER INLET SIDE
WATER (STEAM) FLOW
STEAM OUTLET SIDE
FIG.4B
HEAT TRANSFER TUBE 17
EXHAUST GAS OUTLET SIDE
EXHAUST GAS FLOW
EXHAUST GAS INLET SIDE
AMOUNT OF HEAT TRANSFERRED
AMOUNT OF HEAT TRANSFERRED
AMOUNT OF HEAT TRANSFERRED
AMOUNT OF HEAT TRANSFERRED
WATER INLET SIDE
WATER (STEAM) FLOW
STEAM OUTLET SIDE
FIG.4C
HEAT TRANSFER TUBE 17
EXHAUST GAS OUTLET SIDE
EXHAUST GAS FLOW
EXHAUST GAS INLET SIDE
AMOUNT OF HEAT TRANSFERRED
AMOUNT OF HEAT TRANSFERRED
AMOUNT OF HEAT TRANSFERRED
AMOUNT OF HEAT TRANSFERRED
WATER INLET SIDE
WATER (STEAM) FLOW
STEAM OUTLET SIDE

FIG.5
START
ST1
DATA MEASUREMENT AT TIME n
INDIRECT METHOD
ST2
DETERMINE HEAT QUANTITY CHANGE PER UNIT TIME Q【J/s】
CALCULATION OF ENTHALPY H【J/kg】
Hgas_in=Table(Pgas_in,Tgas_in)
Hsteam_in=Table(Psteam_in,Tsteam_in)
Hgas_out=Table(Pgas_out,Tgas_out)
Hsteam_out=Table(Psteam_out,Tsteam_out)
Qgas【J/s】=Ggas【kg/s】·(Hgas_in-Hgas_out)【J/kg】
Qsteam【J/s】=Gsteam【kg/s】·(Hsteam_in-Hsteam_out)【J/kg】
ST3
REFER TO MAP OF HEAT EXCHANGE EFFICIENCY η IN STEADY STATE
ST4
Qmas=Qgas·η-Qsteam
ST5
HEAT QUANTITY CHANGE PER UNIT TIME Qmas IS DETERMINED
A
DIRECT METHOD
ST6
TEMPERATURE OF HEAT TRANSFER TUBE IS MEASURED AND CALCULATED
DIVIDED ELEMENTS i OF HEAT TRANSFER TUBE
Qmas=ΣMi·Cpi·(Ti(n)-Ti(n-1))/dt
Mi: MASS OF ELEMENT i
Cpi: SPECIFIC HEAT OF ELEMENT i
Ti(n-1): TEMPERATURE AT TIME n-1
Ti(n): TEMPERATURE AT TIME n
dt: TIME ELAPSED BETWEEN TIME n AND TIME n-1

# FIG.6

A
S7
DETERMINE WATER SUPPLY RATE CORRECTION dGsteam.
dGsteam=Qmas·GAIN
S8
PREDICT [Ggas_n+1] AT TIME n+1 ON THE BASIS OF DATA MEASURED AT TIME n.
S9
DETERMINE REFERENCE WATER SUPPLY RATE Gsteam_set.
Gsteam_set=Ggas_n+1·(Hgas_in-Hgas_out)/(Hsteam_out-Hsteam_in)
S10
SUPPLY WATER AT DETERMINED TARGET WATER SUPPLY RATE Gsteam_target
Gsteam_target=Gsteam_set+dGsteam
END

# FIG.7

FLOW RATE INDICATION
SIGNAL FROM ECU
EXHAUST GAS
FLOW RATE DELAY
DELAY TIME CONSTANT
VALUE MEASURED
IN ADVANCE.
TIME

# FIG.8

1500
0
TEMPERATURE (℃)
WATER SUPPLY RATE (g/sec)
EXHAUST GAS TEMPERATURE
WATER SUPPLY RATE
MEASURED STEAM TEMPERATURE
TARGET STEAM TEMPERATURE
0
5
10
15
20
25
30
TIME ELAPSED (sec)

# FIG.9

EXHAUST GAS HEAT EXCHANGE ENERGY
STEAM HEAT EXCHANGE ENERGY
THERMAL MASS LOSS ENERGY
OUTPUT ENERGY (W)
0
5
10
15
20
25
30
TIME ELAPSED (sec)

# FIG.10

1000
0
TEMPERATURE (℃)
HEAT TRANSFER TUBE TEMPERATURE
INCREASED IN ALL REGIONS
0 【sec】
1 【sec】
5 【sec】
0
5
10
15
20
25
30
ELEMENT NUMBER

# FIG.11

1500
0
TEMPERATURE (°C)
WATER SUPPLY RATE (g/sec)
EXHAUST GAS TEMPERATURE
WATER SUPPLY RATE
MEASURED STEAM TEMPERATURE
0
5
10
15
20
25
30
TIME ELAPSED (sec)

# FIG.12

EXHAUST GAS HEAT EXCHANGE ENERGY
STEAM HEAT EXCHANGE ENERGY
THERMAL MASS LOSS ENERGY
OUTPUT ENERGY (W)
0
5
10
15
20
25
30
TIME ELAPSED (sec)

# FIG.13

1000
0
TEMPERATURE (℃)
0
5
10
15
20
25
30
ELEMENT NUMBER
HEAT TRANSFER TUBE TEMPERATURE DECREASED ON THE DOWNSTREAM SIDE AND INCREASED ON THE UPSTREAM SIDE → TOTAL THERMAL MASS LOSS 0
0 [sec]
5 [sec]

# FIG.14

S1 S2 S3 S4
M1
REFERENCE SUPPLY RATE PREDICTION MEANS
S1 S2 S3 S4 (S5)
M2
HEAT QUANTITY CHANGE CALCULATION MEANS
Qmas
M3
SUPPLY RATE CORRECTION CALCULATION MEANS
Gsteam_set
dGsteam
M4
TARGET SUPPLY RATE CALCULATION MEANS
Gsteam_target

# FIG.15

STEAM TEMPERATURE (℃)
EXHAUST GAS TEMPERATURE (℃)
0
0.1
0.2
0.3
0.4
0.5
0.6
0.7
0.8

# FIG.16

0.40
0.38
0.30
0.32
0.34
0.36
EXHAUST GAS TEMPERATURE
T4℃
0.25
T3℃
T2℃
0.23
0.24
OPTIMUM VALUE
0.28
0.22
0.26
STEAM FLOW RATE (cc/min)
STEAM TEMPERATURE (℃)
T1℃

# INTERNATIONAL SEARCH REPORT

International application No. PCT/JP02/08195

A. CLASSIFICATION OF SUBJECT MATTER
Int.Cl[7] F01N5/02, F28F27/00, F24H1/00

According to International Patent Classification (IPC) or to both national classification and IPC

B. FIELDS SEARCHED

Minimum documentation searched (classification system followed by classification symbols)
Int.Cl[7] F01N5/02, F28F27/00, F24H1/00

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | US 2001/40061 A1 (Kenji MATUDA), 15 November, 2001 (15.11.01), Full text; all drawings & JP 2001-37009 A | 1-4 |
| A | JP 11-229867 A (Nissan Motor Co., Ltd.), 24 August, 1999 (24.08.99), Full text; all drawings (Family: none) | 1-4 |
| A | Microfilm of the specification and drawings annexed to the request of Japanese Utility Model Application No. 63216/1989 (Laid-open No. 2810/1991) (Calsonic Corp.), 11 January, 1991 (11.01.91), Full text; all drawings (Family: none) | 1-4 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 03 December, 2002 (03.12.02) | 17 December, 2002 (17.12.02) |
| Name and mailing address of the ISA/ Japanese Patent Office | Authorized officer |
| Facsimile No. | Telephone No. |

Form PCT/ISA/210 (second sheet) (July 1998)

## INTERNATIONAL SEARCH REPORT

International application No.
PCT/JP02/08195

C (Continuation). DOCUMENTS CONSIDERED TO BE RELEVANT

| Category* | Citation of document, with indication, where appropriate, of the relevant passages | Relevant to claim No. |
|---|---|---|
| A | JP 9-68363 A (Sanyo Electric Co., Ltd.), 11 March, 1997 (11.03.97), Full text; all drawings (Family: none) | 1-4 |
| A | JP 7-247834 A (Osaka Gas Co., Ltd.), 26 September, 1995 (26.09.95), Full text; all drawings (Family: none) | 1-4 |

Form PCT/ISA/210 (continuation of second sheet) (July 1998)